# EUROPEAN PATENT SPECIFICATION

(11) **EP 2 026 983 B1**
(45) Date of publication and mention of the grant of the patent: **26.08.2009**
(21) Application number: 07748766.8
(22) Date of filing: 12.06.2007
(51) Int. Cl.: B60C 11/12

(54) **TYRE TREAD AND LAMELLA SUITABLE FOR ATTACHING INTO VULCANISATION MOULD TO FORM A SIPE IN A BLOCK OF TYRE TREAD**
REIFENLAUFFLÄCHE UND ZUR BEFESTIGUNG IN EINER VULKANISATIONSFORM GEEIGNETE LAMELLE ZUR BILDUNG EINES LAMELLENEINSCHNITTS IN EINEM REIFENLAUFFLÄCHENBLOCK
BANDE DE ROULEMENT ET LAMELLE DE BANDAGE PNEUMATIQUE APTE À ÊTRE FIXÉE DANS UN MOULE DE VULCANISATION POUR FORMER UNE LAMELLE DANS UN BLOC DE BANDE DE ROULEMENT D'UN BANDAGE PNEUMATIQUE

(30) Priority: 13.06.2006 SK 882006
(43) Date of publication of application: 25.02.2009
(73) Proprietor: CONTINENTAL MATADOR RUBBER, S.R.O., 020 01 Púchov (SK)
(72) Inventor: HAJDÚCH, Jaroslav, 014 01 Bytca (SK); KOTLAS, Ján, 020 01 Puchov (SK)
(74) Representative: Majlingova, Marta
(86) International application number: PCT/SK2007/050014
(87) International publication number: WO 2007/145603

(56) References cited:
- EP-A- 1 533 141
- EP-A- 1 623 818
- WO-A-99/48707
- US-A- 5 350 001
- US-A1- 2002 053 383

## Description

### Technical Field

The invention concerns a vulcanisation mould construction for the production of winter, summer and all-season tyres for motor vehicles, wherein a lamella forms during mould pressing narrow sipes of required shape and amount in the tread blocks in the tread area defined by standard running surface of the tyre. The sipes, formed in this way, ensure more effective force transfer at the point of tyre contact with road surface.

### Background Art

Tyres, which are designed for use with motor vehicles both in winter and all the year round, are characterized, besides the circumferential and cross tread grooves, by a high number of narrow sipes formed by lamellae located in the tread part of the vulcanisation mould cavity. The lamellae are produced by shaping operations of sheet metal of material having required properties (corrosion resistance, strength , ...). They are attached in the mould non-detachably and secured against removal. They are oriented in radial direction with respect to the tyre rotation axis. The lamellae may adopt the depth of tread grooves given by the tyre profile, or it may be variable, depending on the requirements for the tread. The shape of the lamella viewed in radial direction may be composed of known curves (arc, straight line, parabola, etc.) and form a certain pattern (for example the sine function, zigzag, etc). A size and a shape of sipes are given by a shape and a size of the tread blocks. The lamellae which are used in one tread, may be identical or of different shape.

In winter tyres and all the year round tyres, because of their number the lamellae form a high number of grip edges increasing the effectiveness of force transfer at the point of tyre contact with road surface. This phenomenon can be utilised on wet, snowy or icy roads.

In the course of force transfer during interaction of the tyre with the road, the tyre tread is deformed considerably. The deformation influences markedly driving properties, negatively acts on straight-running stability, influences the tyre response rate. After resolution of the projection of forces into the road plane, the extent of deformation depends on the character of the force acting at a given moment. It is therefore clear that the deformation adopts the values of all circle quadrants. The ideal solution in the sense of deformations in the road plane is to use a block without any interruption by sipes or grooves. As this case is undesirable both from legal and technical point of view, it is necessary to interrupt the contiguous tread by grooves. To improve the grip properties, it is necessary to divide the block by narrow sipes, thus influencing adversely the block rigidity. Therefore, various shapes of sipes are used at present: straight with varying depth of the bottom, differently shaped, but mostly having a shape reminding of the goniometric sine function. Shaping the sipe increases rigidity of the block especially in axial direction, partially also in tangential direction to the tyre circumference. The above phenomenon results in the consequence that the block deformation is different in the longitudinal and transverse direction with respect to the sipe.

Recent knowledge proves that various producers start to use shaped sipes to achieve increased rigidity in all directions and uniform distribution of strain in the tread block. This leads in the least to minimum deformation during the force transfer, speed of the response on driver's initiative increases, road-traffic safety increases. The knowledge on recently known models of interlockable sipes is as follows:

3-D sipes of the firm Continental, described in the European Patent EP 1 223 054 A1 of January 12th, 2001, have the shape of a wavy line composed with alternately arranged radii of different diameter located against each other. A lamella in its bottom part changes to the opposite shape, where arcs of a small diameter are replaced by arcs of a greater diameter and vice versa. Shape modifications of such arrangement may include the shape of a triangle or rectangular tetragon or possibly of their combination. The characteristics of interlocking will differ in dependence on using particular shapes. Interlocking will take place with a time delay.

Solution of the firm Semperit, described in the patent document US 5 350 001 of September 9th, 1994, shows a sipe having the shape of a sine function changing to a shape shifted by 1/4 of the wave length. Repeating in the radial direction depends on the shape, it may take values of 2 or more. For the number 2, the surface of the sipe at the place of intersecting the tyre surface is radially oriented, for higher numbers it is angularly displaced from the radial direction. Solutions having the shape of composite triangle grooves have variously oriented edges.

Patent EP 0 131 246 of the firm Continental describes a zigzag groove contiguously changing from the upper curve into the same curve located in its lower part and shifted by 1/4 of its length.

Patent WO 99/48707 of the firm Goodyear describes a sipe formed by a planar surface with mutually interlocking dome-shaped recesses alternately located at one side and dome-shaped protrusions at the other side, alternately oriented to the axis of the sipe. Interlocking with respect to the protrusion shape took place with a certain time delay.

The above described document serves as a basis for further solution of the firm Goodyear according to the document EP 1 533 141 A1, in which there are regularly arranged protrusions from the sipe plane and openings continuously following after each other. Their shape may have a triangular, quadrilateral, .... up to x-lateral cross-section. By this solution the firm Goodyear partially removes slippage, and the outset of interlocking is sharper.
Axial direction - is the direction given by the rotation axis of the tyre on a motor vehicle;
Radial direction - is the direction given by the axis normal to the circumferential circular line and the rotation axis, which it simultaneously intersects;
Tangential direction - is the direction given by the tangent line to the circumferential circular line;
Lamella - is a moulded piece of metal sheet of a material having required properties, defined thickness, firmly attached to the mould cavity in the tread area, giving shape and dimensions of narrow sipes in the tread blocks;
Sipe - is a radially oriented cut, created in the tread blocks of a tyre in the mould;
Radial plane - is the plane running through the middle of the sipe, which goes through the x axis of the function creating the periodically repeating element.
European Patent Application EP 1623818 - A discloses a tire tread comprising the features as recited in the preamble of claim **1** of the present application and a lamella comprising the features as recited in the preamble of claim **8** of the present application.

### Disclosure of Invention

The subject-matter of the invention, as defined in claim 1, is a tyre tread having at least one row of blocks arranged in the circumferential direction of the tyre, where at least one of the blocks is provided with one or more shaped 3D sipes in radial direction, and the shaped sipe is delimited by two mutually matching shaped surfaces created by a lamella in the course of vulcanisation. The sipe has the shape of a periodically repeating element drawn out into a plane in the direction of the radial plane, wherein the plane is at least once interrupted at a certain interval in the radial direction and replaced by a surface formed of the same periodically repeating element shifted by 1/2 of the period. The above periodically repeating element consists of arms interconnected by arcs which will after drawing them up into a surface create parts of a cylinder lateral surface. The surfaces which are formed at the places of interruption make with the radial plane of the sipe angles α₁ and α₂, which are 75 to 90°.

In more detail, the periodically repeating element is formed by 2 pairs of arms interconnected by 2 arcs oriented against each other and shifted relative to each other on an axis through which the radial plane passes.

The arcs of the periodically repeating element may be connected to the arms of the periodically repeating element either tangentially or non-tangentially.

According to a preferred embodiment, the periodically repeating element may be a sine function or other function, which adopts values both over and under the x axis and it exhibits arcs in its peaks.

The peak arcs interconnecting the arms may have a concave or convex shape.

A further subject-matter of the invention, as defined in claim 8, is a lamella which can be attached inside the vulcanisation mould to create a sipe in a block of tyre tread. This lamella is formed by drawing the periodically repeating element up to a surface, wherein the element consists of 2 pairs of arms interconnected by two arcs oriented against each other and shifted relative to each other on an axis, through which the radial plane passes, and in the radial direction the surface is interrupted at a certain interval and replaced with a surface formed by the same periodically repeating element shifted by 1/2 of the period, and the surfaces formed at the places of interruption make with the radial plane of the sipe angles α₁ and α₂, which are 75 to 90°.

The lamella, as well as the sipe may have the arcs connected to the arms of the periodically repeating element either tangentially or non-tangentially.

The periodically repeating element, which determines the shape of the lamella, may preferably be a sine function, but it may be any other function, which, similarly as the sine function, forms arcs and arms both under and over the x axis. The peak arcs of the periodically repeating element interconnecting the arms of the periodically repeating element may have a concave shape or a convex shape.

To simplify description of the lamella body it is appropriate to describe it just as a surface formed by neutral axes during bending the lamella. We shall not take into account radii and bevels, necessary for the technology of thin-walled products made by cupping process. The lamella body is then formed by uniformly deposited material with respect to neutral plane in the direction of both sides of the plane. From the present knowledge it is obvious that lamellae of the type of periodically repeating elements are able to ensure appropriate force transfer in axial direction. If the force transfer takes place in the tangential direction, greater deformation of blocks occurs. Therefore, the invention goes out from a lamella of a periodically repeating element, where the shape is interrupted at a given interval in the radial direction and replaced by the shape of the same periodically repeating element, shifted by a period. This prevents long mutual movement between particular parts of the tread block and force transfer at breaking and grip and at the movement in curves. The advantage in comparison with presently used lamellae is the shortened time of interlocking, caused by horizontal surface, increased rigidity of tread blocks, marked onset of interlocking, better course of the tread block wear, better transfer of forces when changing the states of motion under influence of limiting mutual shift of particular parts of the tread blocks both in radial and axial direction, which result in increased safety and vehicle comfort.

The lamella is produced by moulding sheet metal material. It is formed as 3-dimensional moulded piece intended to be located in the cavity of a vulcanisation mould, by means of which it creates a sipe in a block of tyre tread. The lamella axis is identical with the neutral axis of the moulded piece.

### An overview of figures in the drawings

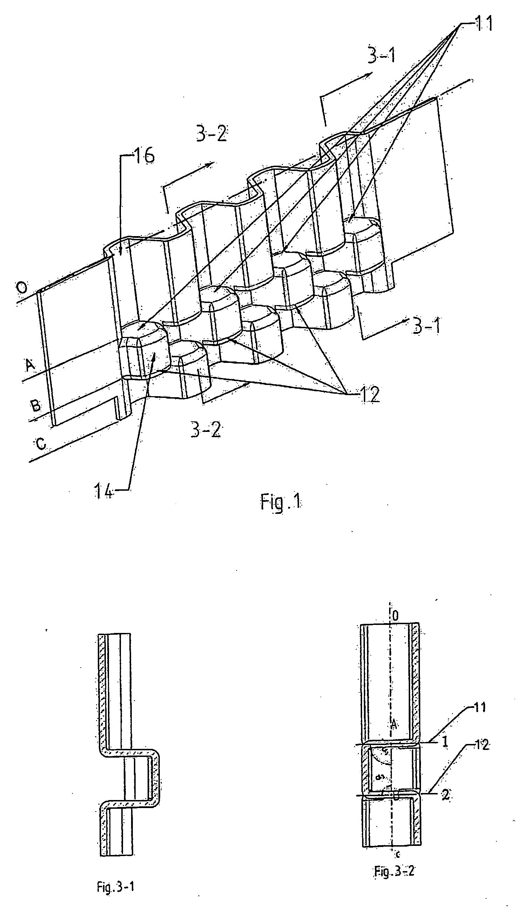

On the attached drawings, the lamella is shown in Fig. 1 in a perspective view.

Fig. 2 shows the way of forming a lamella similar to that of Fig. 1, without radii and bevels.

Figs. 3-1 and 3-2 show sections through the lamella at the places 3-1 and 3-2.

Figs. 4-1 and 4-2 show open halves of a tyre tread block with two different shapes of sipes and the respective lamellae.

Figs. 5-1 to 5-6 show tyre tread blocks with various degrees of tyre wear.

### Examples of invention embodiments

The lamella shown in Fig. 1 and its sections shown in Figs. 3-1 and 3-2 is formed by moulding sheet metal material to a three-dimensional moulded piece. It contains 3.5 times repeated element drawn up into a surface having the length equal to the length of the interval 0-C. Within the interval AB, the shape is interrupted and replaced by the same periodically repeating element drawn up into a surface, shifted by a half of the period. In the interval BC the lamella adopts again its original shape. At the places of interruption of the surfaces (points A and B), the lamella surfaces are delimited and closed by the surfaces 11, 12 (visible in Fig. 3-2, Fig. 3-1), which are identical to the planes 1, 2, passing and intersecting at the points A and B, inclined at the angles α₁ and α₂, the value of which is close or equal to the right angle. The value of the angles α₁ and α₂, when expressed numerically, may be from 75 to 90°. It means that the surfaces 11 and 12 are essentially parallel to the tyre tread surface.

The peaks of the periodically repeating element form arcs which, after drawing them up into a surface, form parts 14 and 16 of a cylinder lateral surface. The arms of the periodically repeating element, after drawing them up into a surface, form inclined surfaces which may be called arm surfaces. In this case, the arms and arcs of the periodically repeating element are interconnected non-tangentially.

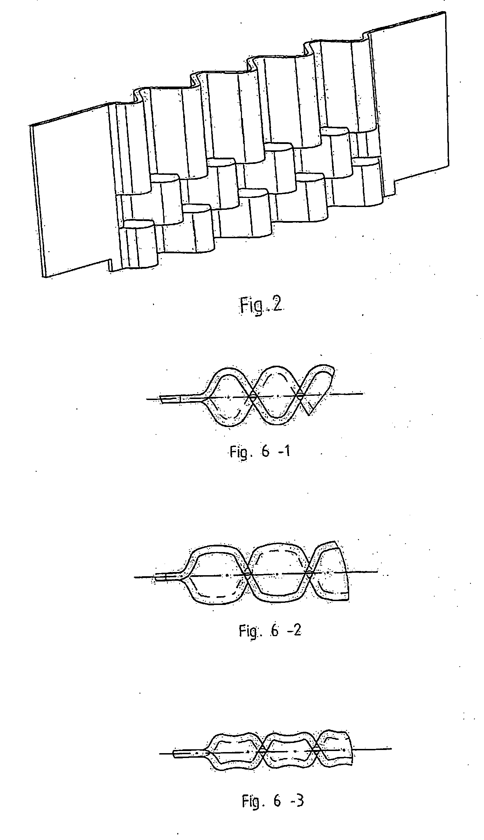

Fig. 2 shows a lamella, for which the periodically repeating element is a sine function. Nevertheless, this picture shows merely theoretical formation of the lamella and in this case the angles α₁ and α₂ equal to 90°. In this case, the arms are connected to the peak arcs of the periodically repeating element tangentially.

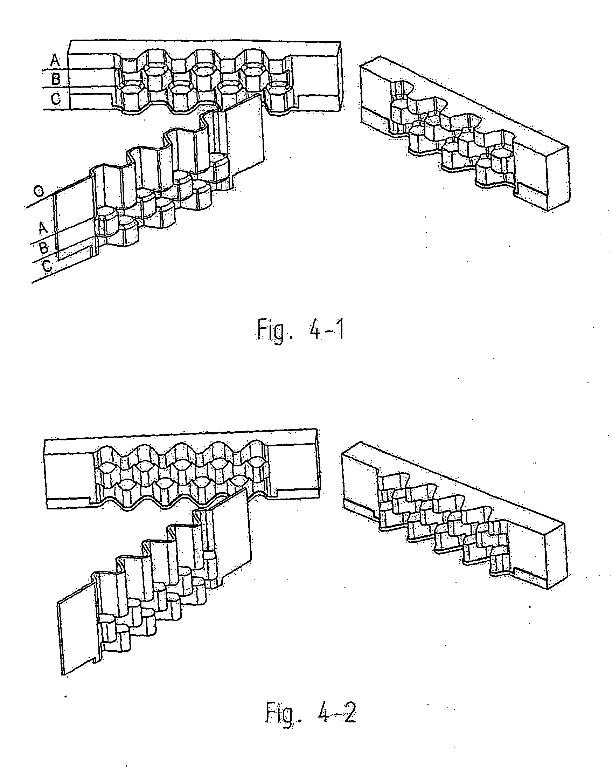

The lamella shape creates a sipe in the tyre tread block of negative shape. Fig. 4-1 shows open halves of the tyre tread block with a sipe, formed by the lamella in the forefront. Fig. 4-2 shows the same view of two open halves of the tyre tread block with a sipe, formed by a lamella, for which the periodically repeating element is a sine function. The corresponding lamella is in the figure in the forefront.

The shape of the sipe during the tyre wear depends on the momentary value of the height of the tyre tread block.

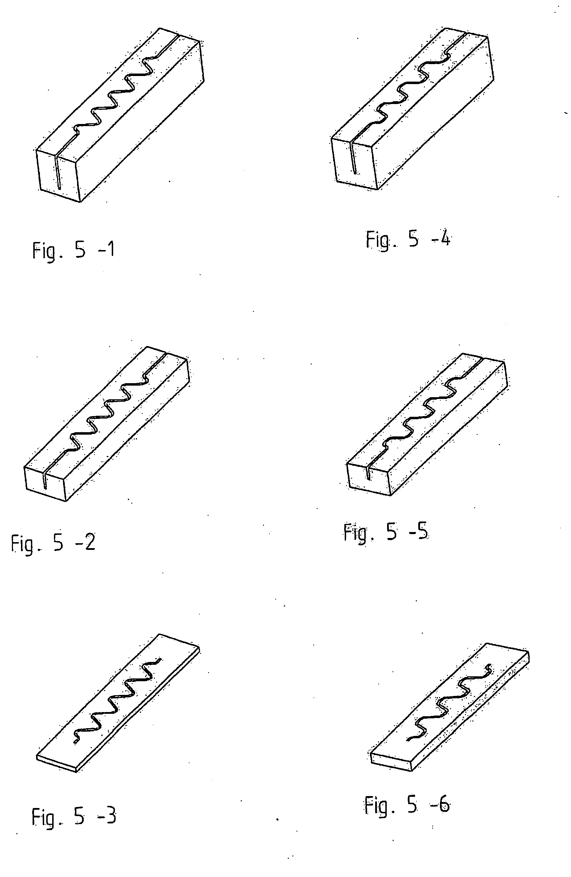

Fig. 5-1 shows the same tyre tread block as shown in Fig. 4-2, but in the form in which it may be seen on the tyre tread. Fig. 5-1 shows the shape of the sipe on a tyre tread block for a new tyre. This sipe shape is visible at the interval 0-A (Fig. 3-2). The shape of the sipe in the tyre tread block wear at the interval 0-A corresponds approximately to 0 to 30 % of the overall height (depth) of the sipe.

Fig. 5-2 shows a partially worn tyre tread block where the shape of the sipe on the tyre tread block surface is visible at the interval A-B. The shape of the sipe at the tyre tread block wear at the interval A-B corresponds approximately to 30 to 60 % of the overall height (depth) of the sipe.

Fig. 5-3 shows a completely worn tyre tread block where the shape of the sipe on the tyre tread block surface is visible at the interval B-C, which is identical with the original shape at the interval 0-A. The shape of the sipe at the tyre tread block wear at the interval B-C corresponds approximately to 60 to 100 % of the overall height (depth) of the sipe.

Fig. 5-4 to Fig. 5-6 differ from Fig. 5-1 to Fig. 5-3 only in the shape of the periodically repeating element. The sipe shape in the course of the tread block wearing depends on the momentary value of the height of the tread figure, it is described by Fig. 5:
Fig. 5-1 The sipe shape for the wear of the tread block at the interval 0-A corresponding approximately to 0 to 30 % of the overall sipe height.
Fig. 5-2 The sipe shape for the wear of the tread block at the interval A-B corresponding approximately to 30 to 60 % of the overall sipe height.
Fig. 5-3 The sipe shape for the wear of the tread block at the interval B-C corresponding approximately to 60 to 100 % of the overall sipe height.

The shape of the periodically repeating element may at its peak adopt shapes, where the peak cylindrical surface is connected to the arms either tangentially (Fig. 6-1) or non-tangentially (Fig. 6-2, Fig. 6-3). In the case where the peak cylindrical surface is connected tangentially, both the case of convex and concave formation of the peak (Fig. 6-2, Fig. 6-3) may occur.

## Claims

1. Tyre tread containing at least one row of blocks arranged in the circumferential direction of the tyre, where at least one of the blocks is provided with one or more shaped 3D sipes in radial direction, and this shaped sipe is delimited by two mutually matching shaped surfaces created by a lamella in the course of vulcanisation, wherein the sipe has the shape of a periodically repeating element drawn up into a surface in the direction of radial plane, where the surface is interrupted in radial direction at least once at a certain interval and replaced with a surface created from the same periodically repeating element shifted by 1/2 of the period, and where the above periodically repeating element consists of arms interconnected by arcs which, after drawn up into a surface, form parts (14, 16) of a cylinder lateral surface, the tyre tread being **characterized in that** surfaces (11, 12) formed at the places of interruption make with the radial plane of the sipe angles α₁ and α₂, which are from 75 to 90°.

2. Tyre tread according to claim 1, **characterized in that** the periodically repeating element is formed of two pairs of arms interconnected by two arcs oriented against each other and shifted relative to each other on an axis, through which the radial plane passes.

3. Tyre tread according to claim 2, **characterized in that** the arcs are connected to the arms tangentially.

4. Tyre tread according to claim 2, **characterized in that** the arcs are connected to the arms non-tangentially.

5. Tyre tread according to claim 1 , 2 for 3, **characterized in that** the periodically repeating element is a sine function.

6. Tyre tread according to claim 1, **characterized in that** the arms connecting the arcs have a concave shape.

7. Tyre tread according to claim 1, **characterized in that** the arms connecting the arcs have a convex shape.

8. Lamella suitable to be attached inside a vulcanisation mould to form a sipe in a tyre tread block according to claims 1 to 7, the lamella being formed by drawing up a periodically repeating element into a surface where the above element consists of 2 pairs of arms interconnected by two arcs oriented against each other and shifted relative to each other on an axis, through which the radial plane passes, and in the radial direction, the surface being interrupted at least once at a certain interval and replaced with a surface created from the same periodically repeating element shifted by 1/2 of the period, the lamella being **characterized in that** the surfaces (11, 12) formed at the places of interruption make with the radial plane of the sipe angles α₁ and α₂, which are from 75 to 90°.

9. Lamella according to claim 8, **characterized in that** the arcs are connected to the arms tangentially.

10. Lamella according to claim 8, **characterized in that** the arcs are connected to the arms non-tangentially.

11. Lamella according to claim 8 or 9, **characterized in that** the periodically repeating element is a sine function.

12. Lamella according to claim 10, **characterized in that** the arcs interconnecting the arms have a concave shape.

13. Lamella according to claim 8, **characterized in that** the arcs interconnecting the arms have a convex shape.

## Patentansprüche

1. Die Reifenlauffläche, die minimal eine in Umfangsrichtung des Reifens angeordnete Blockreihe enthält, wobei minimal einer dieser Blöcke mit einem oder mehreren geformten 3D Lamelleneinschnitten in radialer Richtung versehen ist und dieser geformte Lamelleneinschnitt mit zwei ineinander passenden geformten Flächen eingeschränkt ist, die mit einer Lamelle während der Vulkanisation gebildet sind, wo der Lamelleneinschnitt die Form eines sich periodisch wiederholenden Elementes hat, das in Richtung der radialen Ebene hinausgezogen ist, wobei in radialer Richtung diese Fläche minimal einmal in einem bestimmten Intervall unterbrochen ist und mit einer Fläche aus einem sich gleichfalls periodisch wiederholenden Element, verschoben um eine ½ Periode, ersetzt ist und wobei das erwähnte, sich periodisch wiederholende Element aus Armen besteht, die mit Bögen verbundenen sind, die nach dem Aufziehen in die Fläche die Teile (14, 16) der Mantelwalze bilden, wo die Reifenlauffläche **dadurch gekennzeichnet ist, dass** die in den Unterbrechungsstellen entstandenen Flächen (11, 12) mit der radialen Ebene des Lamelleneinschnitts den Winkel α₁ und α₂ bilden, der 75 bis 90° beträgt.

2. Die Reifenlauffläche gemäß Anspruch 1 ist **dadurch gekennzeichnet, dass** das sich periodisch wiederholende Element aus zwei Armpaaren gebildet ist, die mit zwei gegenüber orientierten Bögen verbunden sind und gemeinsam auf der Achse verschoben sind, durch die die radiale Ebene verläuft.

3. Die Reifenlauffläche gemäß Anspruch 2 ist **dadurch gekennzeichnet, dass** die Bögen auf den Armen tangential angeschlossen sind.

4. Die Reifenlauffläche gemäß Anspruch 2 ist **dadurch gekennzeichnet, dass** die Bögen auf dem Rahmen nicht tangential angeschlossen sind.

5. Die Reifenlauffläche gemäß Anspruch 1, 2 oder 3 ist **dadurch gekennzeichnet, dass** sich das periodisch wiederholende Element die Funktion Sinus ist.

6. Die Reifenlauffläche gemäß Anspruch 4 ist **dadurch gekennzeichnet, dass** die die Arme verbindenden Bögen eine konkave Form haben.

7. Die Reifenlauffläche gemäß Anspruch 1 ist **dadurch gekennzeichnet, dass** die die Arme verbindenden Bögen eine konvexe Form haben.

8. Die Lamelle geeignet für die Befestigung ins Innere der Vulkanisierungsform für die Bildung des Lamelleneinschnitts im Block der Reifenlauffläche gemäß Anspruch 1 bis 7, wobei die Lamelle durch Herausziehen in die Fläche des sich periodisch wiederholenden Elements gebildet ist, wobei das angeführte Element aus 2 Armpaaren besteht, die mit zwei gegenüber orientierten Bögen verbunden sind und gegenseitig auf der Achse verschoben sind, durch die die radiale Ebene verläuft, und in radialer Richtung in einem bestimmten Intervall diese Fläche unterbrochen ist und mit einer aus einem sich periodisch wiederholenden Element, das um eine ½ Periode verschoben ist, gebildeten Fläche ersetzt ist und wobei die Lamelle **dadurch gekennzeichnet ist, dass** die in den Unterbrechungsstellen entstandenen Flächen (11, 12) mit der radialen Ebene des Lamelleneinschnitts den Winkel α₁ und α₂ bilden, der 75 bis 90° beträgt.

9. Die Lamelle gemäß Anspruch 8 ist **dadurch gekennzeichnet, dass** die Bögen auf den Armen tangential angeschlossen sind.

10. Die Lamelle gemäß Anspruch 8 ist **dadurch gekennzeichnet, dass** die Bögen auf den Armen nicht tangential angeschlossen sind.

11. Die Lamelle gemäß Anspruch 8 oder 9, ist **dadurch gekennzeichnet, dass** das sich periodisch wiederholende Element die Funktion Sinus ist.

12. Die Lamelle gemäß Anspruch 10, ist **dadurch gekennzeichnet, dass** die die Arme verbindenden Bögen eine konkave Form haben.

13. Die Lamelle gemäß Anspruch 8, ist **dadurch gekennzeichnet, dass** die die Arme verbindenden Bögen eine konvexe Form haben.

## Revendications

1. Bande de roulement de bandage pneumatique possédant au moins une rangée de blocs placés le long de la pneumatique, dans laquelle au moins un de ces blocs possède un ou plusieurs crans à lamelle 3D dans la direction radiale, ce cran à lamelle formé étant limité par deux surfaces formées lors de la vulcanisation pour s'aticuler, où le cran à lamelle a la forme d'un élément répétitif, saillant de la surface dans la direction radiale, la surface dans la direction radiale étant deux fois découpée à un certain intervalle et remplacée par une surface créee par le même élément périodique décalé d'une ½ période, et cet élément périodique étant composé des ailes reliées par les arcs formant, après l'extension, les parties (14, 16) du bandage, **caractérisé en ce que** la bande de roulement de bandage pneumatique possède les surfaces (11, 12), créees aux endroits découpés, formant un angle α₁ et α₂, de 75 à 90°, avec la surface radiale du cran à lamelle.

2. Bande de roulement de bandage pneumatique selon la revendication 1, **caractérisée en ce que** chaque élément périodique est formé par deux paires des ailes reliées par deux arcs orientés l'un contre l'autre et décalés sur l'axe du plan radial.

3. Bande de roulement de bandage pneumatique selon la revendication 2, **caractérisée en ce que** les arcs sont reliés aux ailes de façon tangentielle.

4. Bande de roulement de bandage pneumatique selon la revendication 2, **caractérisée en ce que** les arcs sont reliés aux ailes de façon non tangentielle.

5. Bande de roulement de bandage pneumatique selon la revendication 1, 2 ou 3, **caractérisée en ce que** l'élément périodique est la fonction sinus.

6. Bande de roulement de bandage pneumatique selon la revendication 4, **caractérisée en ce que** les arcs reliant les ailes sont de forme concave.

7. Bande de roulement de bandage pneumatique selon la revendication 1, **caractérisée en ce que** les arcs reliant les ailes sont de forme convexe.

8. Lame de moule appropriée pour un montage à l'intérieur d'une moule de vulcanisation pour former le cran à lamelle dans la bande de roulement de bandage pneumatique selon la revendication 1 à 7, où la lamelle étant formé par l'extraction de l'élément périodique dans la surface, cet élémént étant composé de 2 paires d'ailes reliées par deux arcs opposés et décalés sur l'axe du plan radial, et la surface étant découpée à un certain intervalle dans la direction radiale et remplacée par une surface formée d'un même élément périodique décalé d'une ½ période, et **caractérisé par** ce que la lamelle possède les surfaces (11, 12) créees aux endroits découpés, forment un angle α₁ et α₂, de 75 à 90°, avec le plan radial du cran à lamelle.

9. Lame selon la revendication 8, **caractérisée en ce que** les arcs sont reliés aux ailes de façon tangentielle.

10. Lame selon la revendication 8, **caractérisée en ce que** les arcs sont reliés aux ailes de façon no tangentielle.

11. Lame selon la revendication 8 ou 9, **caractérisée en ce que** l'élément périodique est la fonction sinus.

12. Lame selon la revendication 10, **caractérisée en ce que** les arcs reliant les ailes sont de forme concave.

13. Lame selon la revendication 8, **caractérisée en ce que** les arcs reliant les ailes sont de forme convexe.
